# EUROPEAN PATENT APPLICATION

(11) **EP 4 800 460 A1**
(43) Date of publication of application: **02.09.2026**
(21) Application number: 24881052.5
(22) Date of filing: 17.06.2024
(51) Int. Cl.: G02B 30/27

(54) **MICRO-TEXTURE STRUCTURE, PRODUCT, HOUSING AND ELECTRONIC DEVICE**

(30) Priority: 27.10.2023 CN 202311422191
(71) Applicant: BYD Company Limited, Shenzhen, Guangdong 518118 (CN)
(72) Inventor: ZHANG, Aodong, Shenzhen, Guangdong 518118 (CN); ZHANG, Jiaxin, Shenzhen, Guangdong 518118 (CN); LUO, Wenhai, Shenzhen, Guangdong 518118 (CN); ZHAO, Lihong, Shenzhen, Guangdong 518118 (CN)
(74) Representative: Mathys & Squire
(86) International application number: PCT/CN2024/099644
(87) International publication number: WO 2025/086675

(57) **Abstract**

A product, a housing and an electronic device. The product, the housing and the electronic device each have a micro-texture structure. The micro-texture structure comprises: a transparent carrying layer, comprising a first side and a second side arranged opposite to each other; a structural layer, wherein the structural layer is arranged on the first side, and a lens array is arranged in the structural layer; and an image-text layer, wherein the image-text layer is arranged on the second side, a graphic unit array is arranged in the image-text layer, at least some of graphic units in the graphic unit array comprise a plurality of ring-shaped pattern layers which are sleeved with each other, and the graphic unit array is projected through the lens array to form a three-dimensional image.

## Description

### CROSS-REFERENCE TO RELATED APPLICATIONS

The present disclosure claims priority to Chinese Patent Application No. 202311422191.6 filed on October 27, 2023 and entitled "MICRO-TEXTURE STRUCTURE, PRODUCT WITH MICRO-TEXTURE STRUCTURE, AND METHODS FOR PREPARING MICRO-TEXTURE STRUCTURE", which is incorporated herein by reference in its entirety.

### FIELD

The present disclosure relates to the field of electronic device technologies, and in particular, to a micro-texture structure, a product, a housing and an electronic device.

### BACKGROUND

With the advancement of technology and the improvement of living standards, users' demands for electronic devices are no longer limited to the diversification and refinement of functions, but increasingly focus on the aesthetic appeal of design appearance. Typically, a 3D imaging film is formed on the surface of an electronic device to enhance the visual effect during use.

In the related art, a 3D imaging film is usually produced by forming a texture structure layer and an image-text layer on opposite surfaces of a transparent substrate, and utilizing a lens array in the texture structure layer to project or reflect patterns in the image-text layer, forming an image with a magnified effect. However, the 3D imaging film in the related art can only achieve a magnified effect of the patterns in the image-text layer, lacking a three-dimensional sense.

### SUMMARY

The present disclosure aims to provide a micro-texture structure, a product, a housing, and an electronic device, which can solve the problem that the 3D imaging film in the related art can only achieve a magnified effect of the pattern in the image-text layer and lacks a three-dimensional sense.

To solve the above technical problem, the present disclosure is implemented as follows:

In a first aspect, an embodiment of the present disclosure provides a micro-texture structure, which includes:
a transparent carrying layer, wherein the transparent carrying layer includes a first side and a second side arranged opposite to each other;
a structural layer, wherein the structural layer is arranged on the first side, and a lens array is arranged in the structural layer; and
an image-text layer, wherein the image-text layer is arranged on the second side, a graphic unit array is arranged in the image-text layer, at least some of graphic units in the graphic unit array include a plurality of ring-shaped pattern layers sleeved with each other, and the graphic unit array is projected through the lens array to form a three-dimensional image.

In some embodiments, the plurality of ring-shaped pattern layers in the graphic unit are sequentially sleeved from inside to outside, and two adjacent ring-shaped pattern layers are at least partially spaced apart.

In some embodiments, the graphic unit array corresponds in position to the lens array, and a period of the graphic unit array is the same as a period of the lens array.

In some embodiments, the period of the lens array ranges from 5 µm to 5 mm.

In some embodiments, a pattern point on the ring-shaped pattern layer is projected through at least one lens in the lens array to form an image point in the three-dimensional image.

In some embodiments, a reference plane is defined passing through a vertex of the lens, and the reference plane is parallel to a plane where the image-text layer is located, a point in the reference plane is taken as a coordinate origin (0, 0, 0). Coordinates of the pattern point are (xOti, yOti, h0), coordinates of a projection point on the lens corresponding to the pattern point are (xOti, yOti, hc), coordinates of a focus of the lens are (xOm, yOm, F), coordinates of the image point are (xti, yti, hti), satisfying the following formulas:
$xO t i = xOm - \sqrt{\frac{{\left(hc-F\right)}^{2} * {\left(xti-xOm\right)}^{2}}{\left({n}^{2}-1\right) * {\left(xti-xOm\right)}^{2} + {n}^{2} * {\left(hti-F\right)}^{2}}}$
$yO t i = yOm - \sqrt{\frac{{\left(hc-F\right)}^{2} * {\left(yti-yOm\right)}^{2}}{\left({n}^{2}-1\right) * {\left(yti-yOm\right)}^{2} + {n}^{2} * {\left(hti-F\right)}^{2}}}$
wherein h0 is a height of the ring-shaped pattern layer from the reference plane, hti is a height of the image point from the reference plane, F is a focal length of the lens, hc is a height of the projection point from the reference plane, and n is an equivalent refractive index of the transparent carrying layer and the structural layer.

In some embodiments, focal lengths of at least some of lenses in the lens array are equal.

In some embodiments, foci of at least some of lenses in the lens array are located on the same plane;
and/or, vertices of at least some of lenses in the lens array are located on the same plane.

In some embodiments, a thickness of the transparent carrying layer ranges from 0.01 mm to 5 mm.

In some embodiments, the lens in the lens array is a protrusion protruding from the structural layer, and along a thickness direction of the structural layer, a height H of the protrusion satisfies: 1 µm ≤ H ≤ 2 mm.

In some embodiments, a preparation method of the micro-texture structure includes:
a structural layer having a lens array is formed on a first side of a transparent carrying layer;
an image-text layer is formed on a second side of the transparent carrying layer, wherein a graphic unit array is arranged in the image-text layer, at least some of graphic units in the graphic unit array include a plurality of ring-shaped pattern layers sleeved with each other, and the graphic unit array is projected through the lens array to form a three-dimensional image.

In some embodiments, forming the structural layer having the lens array on the first side of the transparent carrying layer includes:
a structure of the lens array is determined;
a preset mold is processed and acquired based on the structure of the lens array;
the structural layer is formed on the first side of the transparent carrying layer by using the preset mold.

In some embodiments, forming the image-text layer on the second side of the transparent carrying layer includes:
coordinate information of image points corresponding to a three-dimensional image to be projected is determined based on the three-dimensional image to be projected;
coordinate information of pattern points corresponding to the graphic unit is calculated according to the coordinate information of the image points and optical parameters of the lens;
processing based on the coordinate information of the pattern points and forming the graphic unit array on the second side of the transparent carrying layer.

In some embodiments, processing based on the coordinate information of the pattern points and forming the graphic unit array on the second side of the transparent carrying layer includes:
a film layer is formed on a surface of the second side of the transparent carrying layer;
the film layer being processed based on the coordinate information of the pattern points to acquire the graphic unit array.

In a second aspect, an embodiment of the present disclosure provides a product, including a product body and the micro-texture structure as described above, wherein the micro-texture structure is arranged on a surface of the product body.

In a third aspect, an embodiment of the present disclosure provides a housing, including a housing body and the micro-texture structure as described above, wherein the micro-texture structure is arranged on the housing body.

In a fourth aspect, an embodiment of the present disclosure provides an electronic device, including a device body and the micro-texture structure as described above, wherein the micro-texture structure is arranged on the device body.

In the embodiments of the present disclosure, the structural layer is arranged on the first side of the transparent carrying layer, and the image-text layer is arranged on the second side of the transparent carrying layer. The lens array is arranged in the structural layer, and the graphic unit array is arranged in the image-text layer. At least some of the graphic units in the graphic unit array include a plurality of ring-shaped pattern layers sleeved with each other. The graphic unit comprising the ring-shaped pattern layers can form a part of the three-dimensional image after being projected by the corresponding lens, and further, the graphic unit array can form a complete three-dimensional image after being projected by the lens array. The three-dimensional image can present a stereoscopic floating effect, thereby greatly enhancing the user's visual experience.

Additional aspects and advantages of the present disclosure will be set forth in part in the description which follows, and in part will be obvious from the description, or may be learned by practice of the present disclosure.

### BRIEF DESCRIPTION OF THE DRAWINGS

The above and/or additional aspects and advantages of the present disclosure will become apparent and readily understood from the description of the embodiments in conjunction with the accompanying drawings, in which:
FIG. 1 is a schematic diagram of a micro-texture structure according to an embodiment of the present disclosure;
FIG. 2 is a schematic diagram of a structural layer according to an embodiment of the present disclosure;
FIG. 3 is a schematic diagram of another structural layer according to an embodiment of the present disclosure;
FIG. 4 is a schematic diagram illustrating the operating principle of a micro-texture structure according to an embodiment of the present disclosure;
FIG. 5 is a schematic diagram of an image-text layer according to an embodiment of the present disclosure;
FIG. 6 is a schematic diagram of a graphic unit according to an embodiment of the present disclosure;
FIG. 7 is a schematic diagram of a formed three-dimensional image according to an embodiment of the present disclosure;
FIG. 8 is a schematic diagram of another micro-texture structure according to an embodiment of the present disclosure;

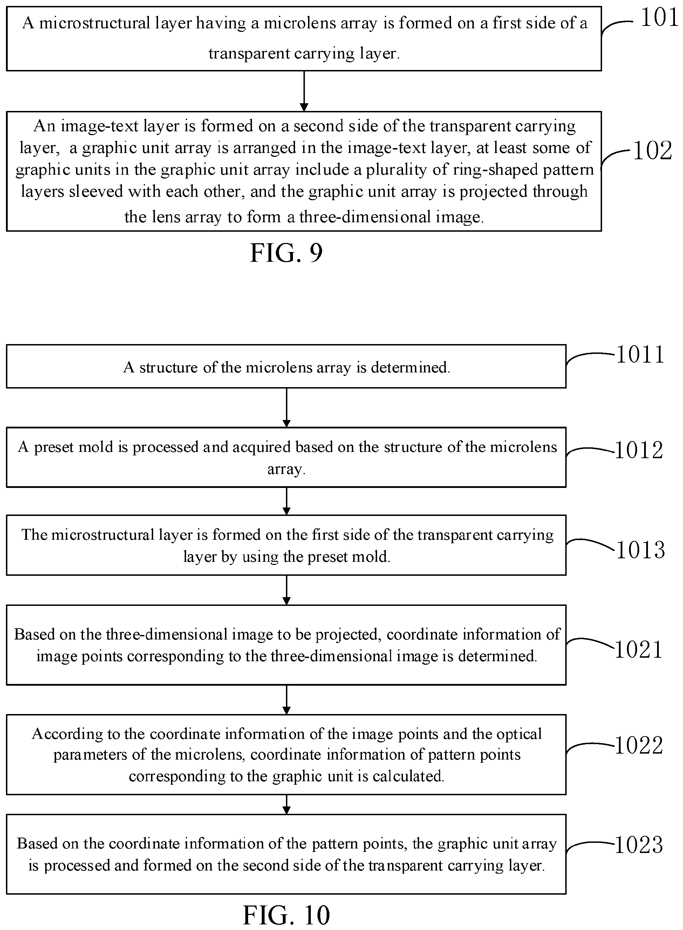

FIG. 9 is a flowchart of a preparation method of a micro-texture structure according to an embodiment of the present disclosure;
FIG. 10 is a flowchart of another preparation method of a micro-texture structure according to an embodiment of the present disclosure.

### REFERENCE SIGNS:

100: transparent carrying layer; 100a: first side; 100b: second side; 200: structural layer; 210: lens array; 201: lens; 300: image-text layer; 310: graphic unit array; 301: graphic unit; 301a: ring-shaped pattern layer; 400: three-dimensional image.

### DETAILED DESCRIPTION

Embodiments of the present disclosure will be described in detail below. The examples of the embodiments are shown in the accompanying drawings, wherein the same or similar reference numerals throughout denote the same or similar elements or elements having the same or similar functions. The embodiments described below with reference to the accompanying drawings are exemplary, and are only used to explain the present disclosure, and will not be construed as limiting the present disclosure. Based on the embodiments in the present disclosure, all other embodiments obtained by a person of ordinary skill in the art without making creative efforts fall within the protection scope of the present disclosure.

The features of the terms "first" and "second" in the description and claims of the present disclosure may explicitly or implicitly include one or more of such features. In the description of the present disclosure, unless otherwise specified, "plurality" means two or more. In addition, "and/or" in the description and claims represents at least one of the connected objects, and the character "/" generally represents that the associated objects before and after it are in an "or" relationship.

In the description of the present disclosure, it will be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., indicate orientations or positional relationships based on the orientations or positional relationships shown in the accompanying drawings, and are only for the convenience of describing the present disclosure and simplifying the description, rather than indicating or implying that the referred device or element must have a specific orientation, be constructed and operated in a specific orientation, and therefore cannot be construed as limiting the present disclosure.

In the description of the present disclosure, it will be noted that, unless expressly specified and limited otherwise, the terms "installed", "connected", and "coupled" will be understood in a broad sense. For example, it may be a fixed connection, a detachable connection, or an integral connection; it may be a mechanical connection or an electrical connection; it may be a direct connection, an indirect connection through an intermediary, or an internal communication between two elements. For those of ordinary skill in the art, the specific meanings of the above terms in the present disclosure will be understood on a case-by-case basis.

The micro-texture structure, the product having the micro-texture structure, and the preparation method of the micro-texture structure provided by the embodiments of the present disclosure will be described in detail below with reference to the accompanying drawings through specific embodiments and their application scenarios.

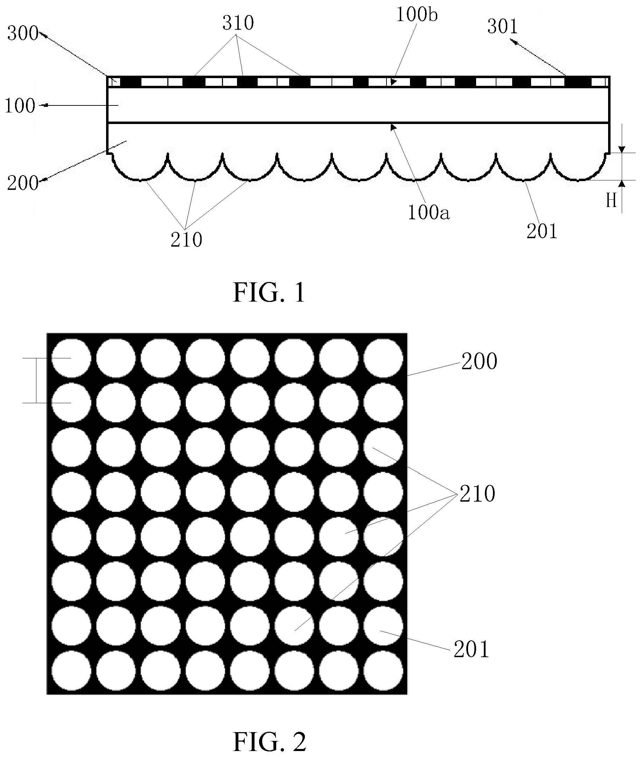

As shown in FIG. 1 to FIG. 7, a micro-texture structure according to some embodiments of the present disclosure includes a transparent carrying layer 100, a structural layer 200, and an image-text layer 300. The transparent carrying layer 100 includes a first side 100a and a second side 100b arranged opposite to each other. The structural layer 200 is arranged on the first side 100a, and a lens array 210 is arranged in the structural layer 200. The image-text layer 300 is arranged on the second side 100b, a graphic unit array 310 is arranged in the image-text layer 300, at least some of graphic units 301 in the graphic unit array 310 include a plurality of ring-shaped pattern layers 301a sleeved with each other, and the graphic unit array 310 is projected through the lens array 210 to form a three-dimensional image 400.

In the embodiment of the present disclosure, the structural layer 200 is arranged on the first side 100a of the transparent carrying layer 100, and the image-text layer 300 is arranged on the second side 100b of the transparent carrying layer 100. The lens array 210 is arranged in the structural layer 200, and the graphic unit array 310 is arranged in the image-text layer 300. At least some of the graphic units 301 in the graphic unit array 310 include a plurality of ring-shaped pattern layers 301a sleeved with each other. The graphic unit 301 comprising the ring-shaped pattern layers 301a can form a part of the three-dimensional image 400 after being projected by the corresponding lens 201, and further, the graphic unit array 310 can form a complete three-dimensional image 400 after being projected by the lens array 210. The three-dimensional image 400 can present a stereoscopic floating effect, thereby greatly enhancing the user's visual experience.

Specifically, the structural layer 200 and the image-text layer 300 are respectively arranged on two sides of the transparent carrying layer 100. The structural layer 200 includes a plurality of lenses 201, and the plurality of lenses 201 are arranged in an array to form the lens array 210. The arrangement of the plurality of lenses 201 may be a rectangular array arrangement or a hexagonal array arrangement.

In some embodiments, the lens 201 may include optical structure units capable of imaging, such as spherical lenses, aspherical lenses, Fresnel lenses, cylindrical lenses, etc. Of course, the lens 201 may also be other types of optical structure units, which is not limited in the embodiments of the present disclosure.

In some embodiments, the transparent carrying layer 100 may be made of transparent materials such as Polycarbonate (PC), Polyethylene terephthalate (PET), Polyimide (PI), etc. Of course, the transparent carrying layer 100 may also be made of other transparent materials, which is not limited in the embodiments of the present disclosure.

In some embodiments, a thickness of the transparent carrying layer 100 ranges from 0.01 mm to 5 mm. Specifically, the thickness of the transparent carrying layer 100 may be set to any value within the range of 0.01 mm, 0.05 mm, 0.1 mm, 0.3 mm, 0.4 mm, 0.5 mm, 0.6 mm, 1 mm, 3 mm, 5 mm, or between any two of these values.

By setting the thickness of the transparent carrying layer 100 within a reasonable range, it can be ensured that the transparent carrying layer 100 has a certain mechanical strength to serve as a carrier, while avoiding that the transparent carrying layer 100 is too thick, which would affect the transmission effect of light in the transparent carrying layer 100.

Specifically, a plurality of graphic units 301 are arranged in the image-text layer 300 located on the second side 100b of the transparent carrying layer 100, and the plurality of graphic units 301 are arranged in an array to form the graphic unit array 310. By arranging that at least some of the graphic units 301 are formed by a plurality of ring-shaped pattern layers 301a sleeved with each other, the plurality of ring-shaped pattern layers 301a in the graphic unit 301 can form a part of the three-dimensional image 400 after being projected by the corresponding lens 201. Furthermore, after the graphic units 301 in the entire graphic unit array 310 are respectively projected by the corresponding lenses 201, a complete three-dimensional image can be formed. The three-dimensional image thus acquired can present a stereoscopic floating effect.

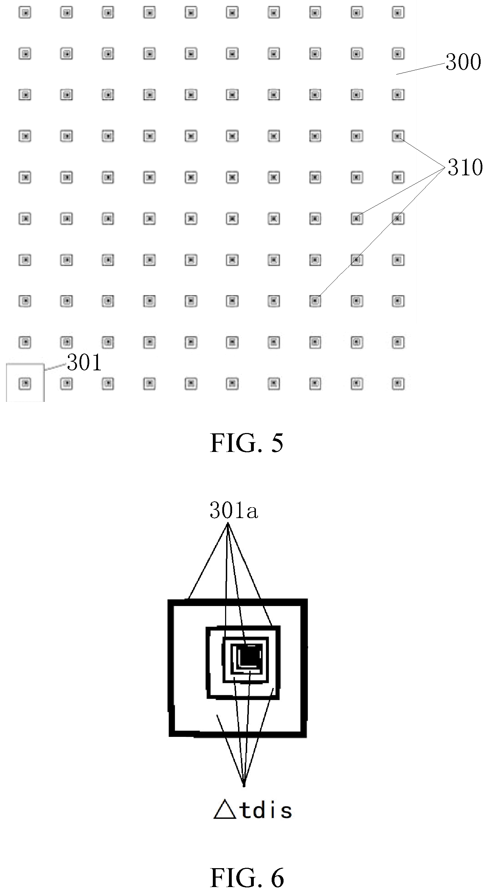

In the embodiment of the present disclosure, as shown in FIG. 5 and FIG. 6, the plurality of ring-shaped pattern layers 301a in the graphic unit 301 are sequentially sleeved from inside to outside, and two adjacent ring-shaped pattern layers 301a are at least partially spaced apart.

In the embodiment of the present disclosure, by arranging the plurality of ring-shaped pattern layers 301a to be sequentially sleeved from inside to outside, and two adjacent ring-shaped pattern layers 301a being at least partially spaced apart, the two-dimensional ring-shaped pattern layers 301a can form a part of the three-dimensional stereoscopic image after being projected by the corresponding lens 201. Furthermore, the ring-shaped pattern layers 301a from the plurality of graphic units 301 are projected by the corresponding lenses 201 to collectively form the three-dimensional image 400 having a stereoscopic floating effect.

It will be understood that, as shown in FIG. 6, in the graphic unit array 310, the structures of the ring-shaped pattern layers 301a included in different graphic units 301 may be the same or different.

In some embodiments, the plurality of ring-shaped pattern layers 301a constituting the graphic unit 301 may include circular rings, elliptical rings, polygonal rings, or irregular ring structures formed by a combination of straight lines and/or curves. The shape and structure of the ring-shaped pattern layers 301a in the graphic unit 301 can be set correspondingly according to the three-dimensional image 400 to be projected, which is not limited in the embodiments of the present disclosure.

In the embodiment of the present disclosure, as shown in FIG. 1, the graphic unit array 310 corresponds in position to the lens array 210, and a period of the graphic unit array 310 is the same as a period of the lens array 210.

In the embodiment of the present disclosure, by arranging the graphic unit array 310 to correspond in position to the lens array 210, and the period of the graphic unit array 310 to be the same as the period of the lens array 210, the graphic unit array 310 can be projected through the lens array 210 to form a clear and complete three-dimensional image 400.

It will be noted that "the same" means that the two are completely equal or the difference between the two is within a preset range.

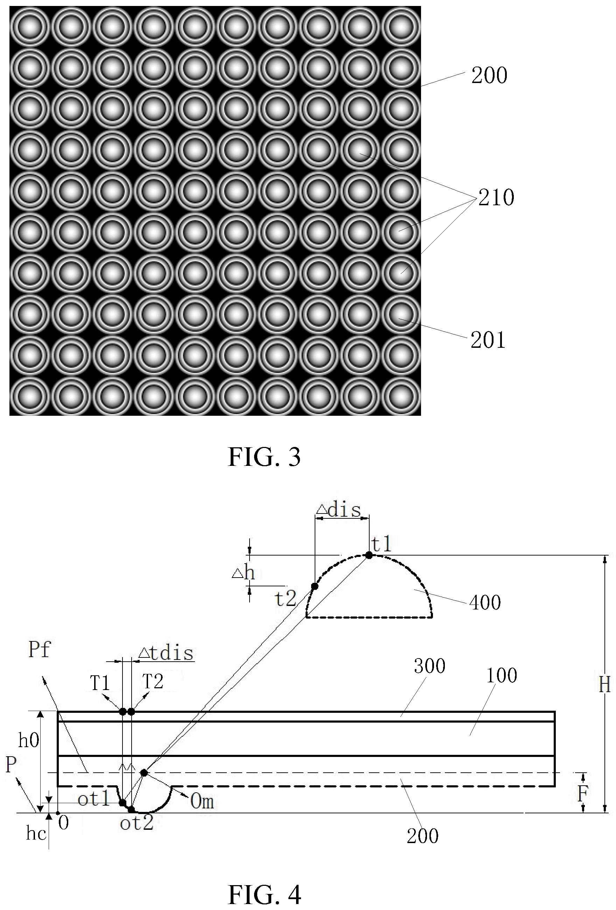

In the embodiment of the present disclosure, as shown in FIG. 2 and FIG. 3, the period of the lens array 210 is set to be from 5 µm to 5 mm.

It will be understood that if the period of the lens array 210 is too large, it will interfere with the imaged three-dimensional image 400 and affect the visual effect. Meanwhile, if the period of the lens array 210 is too small, the processing precision requirement for processing the lens array 210 is high, which is not conducive to actual processing. Therefore, by setting the period of the lens array 210 within a reasonable range, it is convenient for actual processing and manufacturing and can also improve the visual effect.

Specifically, the period of the lens array 210 may be set to any value within the range of 5 µm, 10 µm, 50 µm, 60 µm, 70 µm, 80 µm, 100 µm, 130 µm, 150 µm, 300 µm, 500 µm, 1 mm, 2 mm, 5 mm, or between any two of these values.

It will be noted that the period of the lens array can be determined according to the overall size of the micro-texture structure. When the overall size of the micro-texture structure is relatively large, the period of the lens array can be correspondingly increased; and when the overall size of the micro-texture structure is relatively small, the period of the lens array can be correspondingly decreased. In practical use, the period of the lens array can be flexibly set according to the overall size of the micro-texture structure, and no limitation is imposed on this. In some embodiments, the period of the lens array 210 can be set to be from 5 µm to 300 µm. When the period of the lens array 210 is relatively large, the lens array 210 appears as a dot distribution when observed by the human eye, which will cause some interference with the three-dimensional image 400. Therefore, by setting the period of the lens array 210 within a smaller period range, the microlens array 210 can be made less noticeable to the human eye, thereby further improving the visual effect.

It will be understood that the period of the graphic unit array 310 is the same as or similar to the period of the lens array 210, and the period of the graphic unit array 310 can be set according to the period of the lens array 210.

In some embodiments, focal lengths of at least some of lenses 201 in the lens array 210 are equal.

In the embodiment of the present disclosure, by arranging that the focal lengths of at least some of the lenses 201 in the lens array 210 are equal, the three-dimensional image 400 formed by projection through the lens array 210 is clearer and more accurate, thereby improving the visual effect.

It will be understood that if the focal lengths of some local lenses 201 in the lens array 210 are not equal to those of other lenses 201, there will be a difference in the definition of the images formed by them, which will further cause local blurring in the finally formed three-dimensional image 400.

It will be noted that the focal length of the lens 201 in the lens array 210 can be set according to actual needs, which is not limited in the embodiments of the present disclosure.

In the embodiment of the present disclosure, as shown in FIG. 4, foci of at least some of lenses 201 in the lens array 210 are located on the same plane; and/or vertices of at least some of lenses 201 in the lens array 210 are located on the same plane.

In the embodiment of the present disclosure, by arranging that the foci of at least some of the lenses 201 in the lens array 210 are located on the same plane, and/or arranging that the vertices of at least some of the lenses 201 in the lens array 210 are located on the same plane, it is ensured that the focal lengths of at least some of the lenses 201 in the lens array 210 are equal or similar, and thus the three-dimensional image 400 formed by projection through the lens array 210 is clearer and more accurate.

In the embodiment of the present disclosure, as shown in FIG. 4, a pattern point on the ring-shaped pattern layer 301a is projected through at least one lens 201 in the lens array 210 to form an image point in the three-dimensional image 400.

In the embodiment of the present disclosure, by arranging the plurality of lenses 201 in an array in the structural layer 200, the pattern point on the ring-shaped pattern layer 301a of the graphic unit 301 can be projected through at least one lens 201 to form an image point in the three-dimensional image 400. Furthermore, when all the graphic units 301 are projected by the corresponding lenses 201, a complete three-dimensional image 400 having a stereoscopic floating effect can be formed.

It will be understood that in practical applications, the lens 201 may adopt reflective imaging or refractive imaging. As shown in FIG. 1, by arranging the lens 201 to protrude from the structural layer 200 in a direction away from the image-text layer 300, based on the reflective imaging principle of the lens 201, the graphic unit 301 in the image-text layer 300 is reflected by the lens 201 to form a three-dimensional stereoscopic image on the side of the micro-texture structure close to the image-text layer 300.

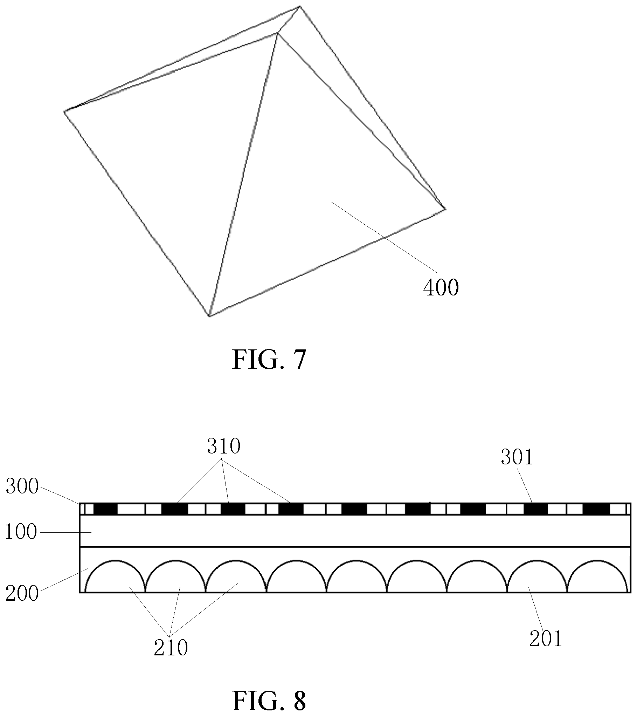

As shown in FIG. 8, by arranging the lens 201 to be recessed from the structural layer 200 toward the direction close to the image-text layer 300, based on the refractive imaging principle of the lens 201, the graphic unit 301 in the image-text layer 300 is refracted by the lens 201 to form a three-dimensional stereoscopic image on the side of the micro-texture structure close to the structural layer 200.

It will be noted that in the embodiments of the present disclosure, the reflective imaging of the lens 201 is taken as an example for explanation. When the lens 201 adopts refractive imaging, its action mechanism is the same as or similar to that of the reflective imaging, and adaptive adjustments can be made, which will not be repeated here in the present disclosure.

In the embodiment of the present disclosure, as shown in FIG. 4, a reference plane is defined passing through the vertex of the lens 201, and the reference plane is parallel to the plane where the image-text layer 300 is located. A point O in the reference plane P is taken as the coordinate origin (0, 0, 0). Coordinates of a pattern point Ti in the ring-shaped pattern layer 301a are (xOti, yOti, h0), coordinates of a projection point Oti on the lens 201 corresponding to the pattern point Ti are (xOti, yOti, hc), coordinates of a focus Om of the lens 201 are (xOm, yOm, F), and coordinates of an image point ti in the formed three-dimensional image 400 are (xti, yti, hti), satisfying the following formulas:
$xO t i = xOm - \sqrt{\frac{{\left(hc-F\right)}^{2} * {\left(xti-xOm\right)}^{2}}{\left({n}^{2}-1\right) * {\left(xti-xOm\right)}^{2} + {n}^{2} * {\left(hti-F\right)}^{2}}}$
$yO t i = yOm - \sqrt{\frac{{\left(hc-F\right)}^{2} * {\left(yti-yOm\right)}^{2}}{\left({n}^{2}-1\right) * {\left(yti-yOm\right)}^{2} + {n}^{2} * {\left(hti-F\right)}^{2}}}$
wherein h0 is a height of the ring-shaped pattern layer 301a from the reference plane, hti is a height of the image point from the reference plane, F is a focal length of the lens 201, hc is a height of the projection point from the reference plane, and n is an equivalent refractive index of the transparent carrying layer 100 and the structural layer 200.

In specific applications, when the structure of the three-dimensional image 400 to be formed is determined, coordinate information of the graphic unit array 310 can be calculated based on the coordinate information of the three-dimensional image 400 and the optical parameters of the lens array 210 using the above formulas (1) and (2), and then processing can be performed to acquire the corresponding structure of the image-text layer 300. In this way, it is convenient to flexibly design the structure of the image-text layer 300 according to the actual desired stereoscopic image effect, meeting the application requirements of different scenarios.

Specifically, at least some of the graphic units 301 in the image-text layer 300 comprise the plurality of ring-shaped pattern layers 301a sleeved with each other. The plurality of ring-shaped pattern layers 301a are projected through the lens array 210 to form a part of the three-dimensional image 400. The imaging mechanism is as follows:

As shown in FIG. 4, it is assumed that the vertices of each lens 201 in the lens array 210 are located on the same plane P, and the foci Om of each lens 201 are located on the same plane Pf. Furthermore, a spatial model can be designed. It is assumed that the formed three-dimensional image 400 floats above the side of the micro-texture structure close to the image-text layer 300, and the vertical distance from the highest point of the three-dimensional image 400 to the plane P is H. The plane P is taken as the reference plane, a point O on the reference plane P is selected as the coordinate origin (0, 0, 0).

Based on the principle of lens reflective imaging, the ring-shaped pattern layer 301a in each graphic unit 301 can be regarded as a point set T comprising countless points, and the formed three-dimensional image 400 can be regarded as a point set t comprising countless points, wherein point T1 in the graphic unit 301 is reflected by the lens 201 to form point t1 in space, and point T2 in the graphic unit 301 is reflected by the lens 201 to form point t2 in space.

Furthermore, based on the reversibility of light, the spatial coordinate information of each point in the point set t can be acquired. Taking a point t1 (xt1, yt1, ht1) in the point set t, this point t1 is refracted by the transparent carrying layer 100 and falls on the target lens 201, and intersects with the lens curved surface of the lens 201. Then, this point t1 is refracted by the transparent carrying layer 100, passes through the focus Om (xOm, yOm, F) of the lens 201, and falls on the projection point ot1 (xot1, yot1, hc) on the lens curved surface of the lens 201. After being vertically reflected at point ot1, it intersects with the plane where the image-text layer 300 is located at point T1. Wherein, ht1 is the vertical distance from point t1 to plane P, F is the focal length of the lens 201, and hc is the vertical distance from the projection point ot1 to plane P.

Combined with the above formulas (1) and (2), the calculation formulas for the coordinate values between point T1 of the image-text layer 300 and point t1 of the three-dimensional image 400 are as follows:
$xO t 1 = xOm - \sqrt{\frac{{\left(hc-F\right)}^{2} * {\left(xt1-xOm\right)}^{2}}{\left({n}^{2}-1\right) * {\left(xt1-xOm\right)}^{2} + {n}^{2} * {\left(ht1-F\right)}^{2}}}$
$yO t 1 = yOm - \sqrt{\frac{{\left(hc-F\right)}^{2} * {\left(yt1-yOm\right)}^{2}}{\left({n}^{2}-1\right) * {\left(yt1-yOm\right)}^{2} + {n}^{2} * {\left(ht1-F\right)}^{2}}}$

Therefore, according to the above formulas (3) and (4), when the coordinates of the image point t1 in the three-dimensional image 400 to be formed are determined, the coordinates of the corresponding pattern point T1 in the image-text layer 300 can be calculated.

It will be noted that the parameters ht0, hc, and hti in the above formulas are the vertical distances from the corresponding points to the reference plane, which can be acquired by measurement using measuring tools or calculated based on design parameters. The parameters F and n in the above formulas can be determined based on the design performance of the lens array and the transparent carrying layer.

Correspondingly, if a point in the point set t, after being refracted by the transparent carrying layer 100, does not fall on the target lens 201, the corresponding point in the graphic unit 301 is a blank area. In this way, the point set t of the three-dimensional image 400 is projected by the target lens 201 onto the corresponding image-text layer 300, forming the plurality of ring-shaped pattern layers 301a sleeved with each other.

Similarly, based on the point set t of the three-dimensional image 400, the coordinate information of the point set T of pattern points projected by each lens 201 in the lens array 210 onto the image-text layer 300 can be calculated, and finally the structure of the graphic unit array 310 in the image-text layer 300 can be determined.

In addition, as shown in FIG. 4, in the three-dimensional stereoscopic image formed by the point set t, the height and position of each point are different, and any two points have a height difference and a distance difference. For example, a height difference Δ h and a distance difference Δ dis exist between point t1 and point t2 in the figure. Correspondingly, a distance difference Δ tdis exists between points T1 and T2 on the image-text layer 300, which are projected from point t1 and point t2 through the target lens 201. Therefore, the point set T is distributed in a ring shape in the image-text layer 300.

It will be understood that the height differences and distance differences between different points in the point set t of the three-dimensional image 400 are different, and the positions of the lenses 201 through which the projection is performed are also different. Therefore, the shape and structure of the ring-shaped pattern layer 301a corresponding to the graphic unit 301 in the graphic unit array 310 will also differ.

In the embodiment of the present disclosure, as shown in FIG. 1, the lens 201 is a protrusion protruding from the structural layer 200. Along the thickness direction of the structural layer 200, the height H of the protrusion satisfies: 1 µm ≤ H ≤ 2 mm.

It will be understood that since the focal length of the lens 201 is related to the height, diameter, and curved surface shape of the protrusion, when the diameter and curved surface shape of the protrusion are determined, the focal length of the lens 201 can be changed by changing the height of the protrusion. Therefore, in the embodiment of the present disclosure, by setting the height of the protrusion within a reasonable range, the focal length of the lens 201 is controlled within a certain range.

Specifically, the height H of the protrusion may be set to any value within the range of 1 µm, 5 µm, 6 µm, 7 µm, 8 µm, 10 µm, 11 µm, 13 µm, 15 µm, 20 µm, 50 µm, 100 µm, 500 µm, 1 mm, 2 mm, or between any two of these values.

An embodiment of the present disclosure further provides a product having a micro-texture structure, including a product body and the micro-texture structure according to the above embodiments, wherein the micro-texture structure is arranged on a surface of the product body.

In the embodiment of the present disclosure, the micro-texture structure is arranged on the surface of the product body. The micro-texture structure includes a transparent carrying layer 100. A structural layer 200 is arranged on a first side 100a of the transparent carrying layer 100, and an image-text layer 300 is arranged on a second side 100b of the transparent carrying layer 100. A lens array 210 is arranged in the structural layer 200, and a graphic unit array 310 is arranged in the image-text layer 300. At least some of graphic units 301 in the graphic unit array 310 include a plurality of ring-shaped pattern layers 301a sleeved with each other. The graphic unit 301 comprising the ring-shaped pattern layers 301a can form a part of a three-dimensional image 400 after being projected by a corresponding lens 201, and further, the graphic unit array 310 can form a complete three-dimensional image 400 after being projected through the lens array 210. The three-dimensional image 400 can present a stereoscopic floating effect, thereby greatly enhancing the user's visual experience.

Specifically, the product in the embodiments of the present disclosure may be a sheet product, a glass product, etc. By arranging the micro-texture structure on the product body, a three-dimensional stereoscopic effect is presented on the surface of the product.

An embodiment of the present disclosure further provides a housing, including a housing body and the micro-texture structure according to the above embodiments, wherein the micro-texture structure is arranged on the housing body.

In the embodiment of the present disclosure, the housing body can be used for connecting with other components to provide protection and decoration. The structure of the housing and specific application scenarios can be set according to actual needs, and no limitation is made herein.

An embodiment of the present disclosure further provides an electronic device, including a device body and the micro-texture structure according to the above embodiments, wherein the micro-texture structure is arranged on the device body.

In the embodiment of the present disclosure, the electronic device includes, but is not limited to: a vehicle, an aircraft, a wearable device, a gaming device, a mobile phone, a tablet computer, a laptop computer, a personal digital assistant, a smart watch, and a pedometer.

An embodiment of the present disclosure further provides a preparation method of a micro-texture structure, for preparing the micro-texture structure according to the above embodiments. The preparation method specifically includes the following steps:
Step 101: a structural layer 200 having a lens array 210 is formed on a first side 100a of a transparent carrying layer 100.

Specifically, the transparent carrying layer 100 may be made of a transparent material. The transparent carrying layer 100 may be a transparent film, a transparent glass, or other transparent material layers. The transparent carrying layer 100 includes a first side 100a and a second side 100b opposite to each other. The structural layer 200 having the lens array 210 is formed on the surface of the first side 100a of the transparent carrying layer 100. The lens array 210 includes a plurality of lenses 201 arranged in an array.

The plurality of lenses 201 may be arranged in a rectangular array, a hexagonal array, or other array arrangements.

Step 102: An image-text layer 300 is formed on a second side 100b of the transparent carrying layer 100. A graphic unit array 310 is arranged in the image-text layer 300. At least some of graphic units 301 in the graphic unit array 310 include a plurality of ring-shaped pattern layers 301a sleeved with each other, and the graphic unit array 310 is projected through the lens array 210 to form a three-dimensional image 400.

Specifically, the image-text layer 300 is formed on the second side 100b of the transparent carrying layer 100, and the image-text layer 300 includes the graphic unit array 310. The number and positions of the graphic units 301 in the graphic unit array 310 correspond to the number and positions of the lenses 201 in the lens array 210, respectively, so that each graphic unit 301 can be projected by a corresponding lens 201 to form a part of the three-dimensional image 400, and further, the graphic unit array 310 can be projected through the lens array 210 to form a complete three-dimensional image 400 having a stereoscopic effect.

In the embodiment of the present disclosure, by forming the structural layer 200 having the lens array 210 on the first side 100a of the transparent carrying layer 100, and forming the image-text layer 300 having the graphic unit array 310 on the second side 100b of the transparent carrying layer 100, wherein at least some of the graphic units 301 in the graphic unit array 310 include the plurality of ring-shaped pattern layers 301a sleeved with each other, the graphic unit 301 comprising the ring-shaped pattern layers 301a can be projected by a corresponding lens 201 to form a part of the three-dimensional image 400, and further, the graphic unit array 310 can be projected through the lens array 210 to form a complete three-dimensional image 400. The three-dimensional image 400 can present a stereoscopic floating effect, thereby greatly enhancing the user's visual experience.

In the embodiment of the present disclosure, Step 101 of forming the structural layer 200 having the lens array 210 on the first side 100a of the transparent carrying layer 100 may include:
Step 1011: a structure of the lens array 210 is determined;
Step 1012: a preset mold is fabricated based on the structure of the lens array 210;
Step 1013: the structural layer 200 is formed on the first side 100a of the transparent carrying layer 100 by using the preset mold.

In the embodiment of the present disclosure, the structure of the lens array 210 can be determined according to actual design requirements. Based on the structure of the lens array 210, the preset mold is fabricated by means such as laser direct writing or mechanical processing. Then, the structural layer 200 is formed on the first side 100a of the transparent carrying layer 100 by using the preset mold through processes such as UV imprinting, nanoimprinting, or hot embossing.

During the preparation of the structural layer 200, preset positioning points may also be fabricated, so that in subsequent processing, the positioning points are used as reference points to improve processing accuracy.

In the embodiment of the present disclosure, Step 102 of forming the image-text layer 300 on the second side 100b of the transparent carrying layer 100 may include:
Step 1021: based on the three-dimensional image 400 to be projected, coordinate information of image points corresponding to the three-dimensional image 400 is determined;
Step 1022: according to the coordinate information of the image points and the optical parameters of the lens 201, coordinate information of pattern points corresponding to the graphic unit 301 is calculated;
Step 1023: processing based on the coordinate information of the pattern points, the graphic unit array 310 is formed on the second side 100b of the transparent carrying layer 100.

Specifically, the coordinate information of the image points of a point set t constituting the three-dimensional image 400 can be determined based on the three-dimensional image 400 to be projected, and the optical parameters of the lens 201 in the structural layer 200 can be determined, wherein the optical parameters at least include: focus coordinate information of the lens 201 and coordinate information of projection points on the lens 201.

Then, based on the aforementioned formulas (1) and (2), coordinate information of a point set T of pattern points in the image-text layer 300 corresponding to the point set t of the three-dimensional image 400 can be calculated. Subsequently, based on the acquired coordinate information of the pattern points, the graphic unit array 310 is processed and formed on the second side 100b of the transparent carrying layer 100.

It will be noted that the calculation principle for acquiring the coordinate information of the point set T of the ring-shaped pattern layers 301a from the coordinate information of the point set t of the three-dimensional image 400 can be referred to in the foregoing content, and will not be repeated here in the embodiments of the present disclosure.

In the embodiment of the present disclosure, Step 1023 of processing based on the coordinate information of the pattern points and forming the graphic unit array 310 on the second side 100b of the transparent carrying layer 100 includes:
S1: a film layer is formed on a surface of the second side 100b of the transparent carrying layer 100;
S2: the film layer is processed based on the coordinate information of the pattern points to acquire the graphic unit array 310.

Specifically, the film layer can be formed on the surface of the second side 100b of the transparent carrying layer 100 by means such as spraying, printing, pasting, or coating. For example, the film layer may be a metal chromium film layer. Then, a photoresist is coated on the surface of the film layer, and based on the calculated coordinate information of the pattern points, processes such as laser direct writing or film exposure, as well as exposure and development of the graphic unit 301, are performed to form the image-text layer 300 including the graphic unit array 310 on the second side 100b of the transparent carrying layer 100.

In other embodiments, processes such as dry etching or wet etching may also be used. Based on the coordinate information of the pattern points acquired in Step 1022, grooves matching the graphic unit 301 are etched on the surface of the second side 100b of the transparent carrying layer 100. Then, the image-text layer 300 including the graphic unit array 310 is acquired by means such as coating or filling with ink.

In the description of this specification, descriptions referring to the terms "one embodiment", "some embodiments", "schematic embodiment", "example", "specific example", or "some examples" mean that specific features, structures, materials, or characteristics described in connection with the embodiment or example are included in at least one embodiment or example of the present disclosure. In this specification, the schematic representations of the above terms are not necessarily directed to the same embodiment or example. Furthermore, the described specific features, structures, materials, or characteristics may be combined in any suitable manner in any one or more embodiments or examples.

Although embodiments of the present disclosure have been shown and described, it will be understood by those of ordinary skill in the art that various changes, modifications, substitutions, and alterations can be made to these embodiments without departing from the principles and spirit of the present disclosure, and the scope of the present disclosure is defined by the claims and their equivalents.

## Claims

1. A micro-texture structure, comprising:
a transparent carrying layer (100), the transparent carrying layer (100) comprising a first side (100a) and a second side (100b) arranged opposite to each other;
a structural layer (200), the structural layer (200) being arranged on the first side (100a), and a lens array (210) being arranged in the structural layer (200); and
an image-text layer (300), the image-text layer (300) being arranged on the second side (100b), a graphic unit array (310) being arranged in the image-text layer (300), at least some of graphic units (301) in the graphic unit array (310) comprising a plurality of ring-shaped pattern layers (301a) which are sleeved with each other, and the graphic unit array (310) being projected through the lens array (210) to form a three-dimensional image (400).

2. The micro-texture structure according to claim 1, wherein the plurality of ring-shaped pattern layers (301a) in the graphic unit (301) are sequentially sleeved from inside to outside, and two adjacent ring-shaped pattern layers (301a) are at least partially spaced apart.

3. The micro-texture structure according to claim 1 or 2, wherein the graphic unit array (310) corresponds in position to the lens array (210), and a period of the graphic unit array (310) is the same as a period of the lens array (210).

4. The micro-texture structure according to claim 3, wherein the period of the lens array (210) ranges from 5 µm to 5 mm.

5. The micro-texture structure according to any one of claims 1 to 4, wherein a pattern point on the ring-shaped pattern layer (301a) is projected through at least one lens (201) in the lens array (210) to form an image point in the three-dimensional image (400).

6. The micro-texture structure according to claim 5, wherein a reference plane passing through a vertex of the lens (201) is defined, and the reference plane is parallel to a plane where the image-text layer (300) is located, a point in the reference plane is taken as a coordinate origin (0, 0, 0), coordinates of the pattern point are (xOti, yOti, h0), coordinates of a projection point on the lens (201) corresponding to the pattern point are (xOti, yOti, hc), coordinates of a focus of the lens (201) are (xOm, yOm, F), coordinates of the image point are (xti, yti, hti), satisfying the following formulas: $xO t i = xOm - \sqrt{\frac{{\left(hc-F\right)}^{2} * {\left(xti-xOm\right)}^{2}}{\left({n}^{2}-1\right) * {\left(xti-xOm\right)}^{2} + {n}^{2} * {\left(hti-F\right)}^{2}}}$ $yO t i = yOm - \sqrt{\frac{{\left(hc-F\right)}^{2} * {\left(yti-yOm\right)}^{2}}{\left({n}^{2}-1\right) * {\left(yti-yOm\right)}^{2} + {n}^{2} * {\left(hti-F\right)}^{2}}}$ wherein, h0 is a height of the ring-shaped pattern layer (301a) from the reference plane, hti is a height of the image point from the reference plane, F is a focal length of the lens (201), hc is a height of the projection point from the reference plane, and n is an equivalent refractive index of the transparent carrying layer (100) and the structural layer (200).

7. The micro-texture structure according to any one of claims 1 to 6, wherein focal lengths of at least some of lenses (201) in the lens array (210) are equal.

8. The micro-texture structure according to any one of claims 1 to 7, wherein foci of at least some of lenses (201) in the lens array (210) are located on the same plane;
and/or, vertices of at least some of lenses (201) in the lens array (210) are located on the same plane.

9. The micro-texture structure according to any one of claims 1 to 8, wherein a thickness of the transparent carrying layer (100) ranges from 0.01 mm to 5 mm.

10. The micro-texture structure according to any one of claims 1 to 9, wherein the lens (201) in the lens array (210) is a protrusion protruding from the structural layer (200), and along a thickness direction of the structural layer (200), a height H of the protrusion satisfies: 1 µm ≤ H ≤ 2 mm.

11. The micro-texture structure according to any one of claims 1 to 10, wherein a preparation method of the micro-texture structure comprises:
forming a structural layer (200) having a lens array (210) on a first side (100a) of a transparent carrying layer (100);
forming an image-text layer (300) on a second side (100b) of the transparent carrying layer (100), a graphic unit array (310) being arranged in the image-text layer (300), at least some of graphic units (301) in the graphic unit array (310) comprising a plurality of ring-shaped pattern layers (301a) which are sleeved with each other, and the graphic unit array (310) being projected through the lens array (210) to form a three-dimensional image (400).

12. The micro-texture structure according to claim 11, wherein forming the structural layer (200) having the lens array (210) on the first side (100a) of the transparent carrying layer (100) comprises:
determining a structure of the lens array (210);
processing and acquiring a preset mold based on the structure of the lens array (210);
forming the structural layer (200) on the first side (100a) of the transparent carrying layer (100) by using the preset mold.

13. The micro-texture structure according to claim 11 or 12, wherein forming the image-text layer (300) on the second side (100b) of the transparent carrying layer (100) comprises:
determining coordinate information of image points corresponding to the three-dimensional image (400) based on a three-dimensional image (400) to be projected;
calculating coordinate information of pattern points corresponding to the graphic unit (301) according to the coordinate information of the image points and optical parameters of the lens (201);
processing based on the coordinate information of the pattern points and forming the graphic unit array (310) on the second side (100b) of the transparent carrying layer (100).

14. The micro-texture structure according to claim 13, wherein processing based on the coordinate information of the pattern points and forming the graphic unit array (310) on the second side (100b) of the transparent carrying layer (100) comprises:
forming a film layer on a surface of the second side (100b) of the transparent carrying layer (100);
processing the film layer based on the coordinate information of the pattern points to acquire the graphic unit array (310).

15. A product, comprising a product body and the micro-texture structure according to any one of claims 1 to 14, the micro-texture structure being arranged on a surface of the product body.

16. A housing, comprising a housing body and the micro-texture structure according to any one of claims 1 to 14, the micro-texture structure being arranged on the housing body.

17. An electronic device, comprising a device body and the micro-texture structure according to any one of claims 1 to 14, the micro-texture structure being arranged on the device body.
